# EUROPÄISCHE PATENTSCHRIFT

(11) **EP 0 950 825 B1**
(45) Veröffentlichungstag und Bekanntmachung des Hinweises auf die Patenterteilung: **05.07.2006**
(21) Anmeldenummer: 99105921.3
(22) Anmeldetag: 24.03.1999
(51) Int. Cl.: F16D 13/58, F16D 25/08

(54) **Ausrückeinehit für eine Kupplungsdruckplatte sowie Betätigung dafür**
Release assembly for a clutch pressure plate and actuator therefor
Unité de débrayage pour plateau de pression d'un embrayage et commande de la même

(30) Priorität: 17.04.1998 DE 19817171; 22.04.1998 DE 19817838; 24.04.1998 DE 19818535; 08.07.1998 DE 19830525
(43) Veröffentlichungstag der Anmeldung: 20.10.1999
(60) Teilanmeldung: 04006615.1
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, 52351 Düren (DE); Heidingsfeld, Dietmar, Dipl.-Ing., 52078 Aachen (DE)
(74) Vertreter: Castell, Klaus

(56) Entgegenhaltungen:
- DE-A- 1 475 412
- DE-C- 477 107
- DE-C- 879 349
- DE-C- 893 299
- GB-A- 301 013
- US-A- 1 913 268
- US-A- 2 329 205
- US-A- 2 358 492
- US-A- 2 380 572
- US-A- 2 406 238
- US-A- 2 682 942
- US-A- 5 033 598

## Beschreibung

Die Erfindung betrifft eine Ausrückeeinheit für eine Kupplungsdruckplatte sowie eine Betätigung für eine Ausrückeeinheit.

Derartige Ausrückeeinheiten für Kupplungsdruckplatten umfassen in der Regel eine zwischen der Kupplungsdruckplatte und einem Kupplungsgehäuse verspannte Tellerfeder, die die Kupplungsdruckplatte gegen eine Reibscheibe einer Kupplung preßt. Hierbei wird die Tellerfeder durch ein Festlager an dem Kupplungsgehäuse gelagert und mittels radial nach innen weisender Zungen durch einen axial wirksamen Ausrücker ausgerückt.

Wegen der hierbei vorhandenen Hebellängen weisen derartige Kupplungen verhältnismäßig große Baulängen auf. Zu dieser durch die Hebel bedingten Baulänge kommt noch hinzu, daß durch einen Belagverschleiß die Tellerfeder eine große Winkelbewegung ausführt, die ebenfalls durch die Kupplung vorgehalten werden muß. Darüber hinaus weist die Gesamtanordnung der Kupplung Toleranzen zwischen Kupplungsgehäuse und Zentralausrücker auf, die ebenfalls über die Baulänge aufgefangen werden müssen.

Beispielsweise aus der US 2,406,238 bzw. aus der US 2,380,572 sind komplexe Hebelanordnungen bekannt, um eine Kupplungsdruckplatte anzutreiben. Bei den dort dargestellten Anordnungen wird jedoch ein zentraler Ausrücker axial verschoben, sodass Bauraumprobleme durch diese Anordnungen nicht beseitigt werden können.

Es ist Aufgabe vorliegender Erfindung, eine möglichst schmale Bauweise einer entsprechenden Kupplung zu ermöglichen.

Als Lösung schlägt die Erfindung eine Ausrückeeinheit für eine Kupplungsdruckplatte mit Mitteln zum Aufbringen einer im wesentlichen axial gerichteten Kraft auf die Druckplatte vor, wobei die Mittel zum Aufbringen der im wesentlichen axial gerichteten Kraft im wesentlichen radial angetrieben werden, umfassend einen Kraftwandler, der eine Kraft mit einer radialen Komponente, in eine im wesentlichen axial gerichtete, auf die Druckplatte aufgebrachte Kraft wandeln kann, und einen Kraftgeber, der durch einen Zentralausrücker betätigbar ist und mit einer Kraft mit einer radialen Komponente auf den Kraftwandler wirken kann, welche Ausrückeeinheit sich dadurch auszeichnet, dass der Kraftgeber einen im wesentlichen radial angeordneten Stößel umfasst, der durch eine radiale Bewegung des Zentralausrückers angetrieben wird.

Eine Umsetzung der Erfindung kann insbesondere durch einen Kraftwandler, der eine Kraft mit einer radialen Komponente in eine im wesentlichen axial gerichtete, auf die Druckplatte aufgebrachte Kraft wandeln kann, und durch einen Kraftgeber, der mit einer Kraft mit einer radialen Komponente auf den Kraftwandler wirken kann, realisiert werden.

Dadurch, daß die Mittel zum Aufbringen der im wesentlichen axial gerichteten Kraft einen radialen Antrieb umfassen, erfolgt dementsprechend eine radiale Verlagerung der Anordnung, wenn ein derartiger Antrieb erfolgt. Insofern braucht bei der erfindungsgemäßen Anordnung eine geringere Baulänge bereitgestellt werden, als bei bekannten Kupplungsbetätigungen, da der für die Betätigung notwendige Raum im wesentlichen in radialer Richtung benötigt wird.

Insbesondere wird auch dementsprechend weniger Bauraum in axialer Richtung für eine Verschleißnachstellung benötigt.

Darüber hinaus kann an dem Übergang zwischen Kraftwandler und Kraftgeber eine axiale Verschiebe- bzw. Ausgleichsmöglichkeit vorgesehen sein, die einen Verschleiß der Kupplungsreibbeläge ausgleicht. Insofern ermöglicht die erfindungsgemäße Anordnung, auf einen Leerweg und somit auf eine hierfür vorzusehende zusätzliche Baulänge zur Gänze bzw. teilweise zu verzichten.

Eine derartige Verschiebe- bzw. Ausgleichsmöglichkeit kann z.B. derart realisiert werden, daß die radial angetriebenen Mittel der Verschiebung, beispielsweise wegen Verschleiß, mit einer axialen Komponente folgen, während ein entsprechender, radialer Antrieb im wesentlichen ortsfest bleibt.

Zur Montageerleichterung können sowohl der Zentralausrücker als auch die Mittel zum Aufbringen einer im wesentlichen axial gerichteten Kraft eine Schulter aufweisen, an welcher die Tellerfeder zumindest bei der Montage zur Anlage kommen kann. So kann die Tellerfeder z. B. sehr einfach auf die Schulter der Mittel zum Aufbringen einer im wesentlichen axial gerichteten Kraft aufgelegt und dann mittels der Schulter des Zentralausrückers in gewünschter Weise positioniert werden, während der Zentralausrücker selbst in seine Einbauposition gebracht wird.

Darüber hinaus wird eine Betätigung für eine axial wirksame Kupplungsdruckplatte mit Mitteln zum Aufbringen einer im wesentlichen axial gerichteten Kraft auf die Druckplatte vorgeschlagen, wobei die Mittel zum Aufbringen einer im wesentlichen axial gerichteten Kraft an einem Kupplungsgehäuse gelagert und die Mittel zum Aufbringen einer im wesentlichen axial gerichteten Kraft über eine radial außerhalb der Lagerung vorgesehene Stelle mit einem Ausrücker wirkverbunden sind.

Auf diese Weise lassen sich auf die Mittel zum Aufbringen einer im wesentlichen axial gerichteten Kraft ohne weiteres Drehmomente übertragen, denen die Lagerung lediglich durch einen Gegendruck entgegenwirken muß, wenn ein derartiges Drehmoment an den Mitteln zum Aufbringen einer im wesentlichen axial gerichteten Kraft durch den Ausrücker bewirkt wird.

Die vorbeschriebenen Anordnungen ermöglichen vorteilhafterweise einen Verzicht auf die sonst üblichen Festlager bzw. Widerlager bei der Lagerung der Mittel zum Aufbringen einer im wesentlichen axial gerichteten Kraft bzw. der unmittelbar auf die Kupplungsdruckplatte wirkenden Tellerfeder. Da für derartige Festlager bzw. Widerlager Bauraum benötigt wird, wird durch eine derartige Anordnung die axiale Baulänge einer erfindungsgemäßen Kupplung weiter reduziert. Darüber hinaus bedingt der Verzicht auf derartige Fest bzw. Widerlager eine entsprechende Montagevereinfachung und Kostenreduktion.

Die erfindungsgemäßen Anordnungen, welche in vorteilhafter Weise auf einen axial zu betätigenden Hebel verzichten und axial auf die Kupplungsdruckplatten aufgebrachten Kräften durch radiale Kräfte begegnen, stellen desweiteren in vorteilhafter Weise eine Schwingungsfilter dar, durch welchen in der Kurbelwelle auftretende axiale Schwingungen, die ansonsten bis in den Zentralausrücker und bis zu dem Kupplungspedal weitergetragen werden, beim Übergang zwischen den Mitteln zum Aufbringen einer im wesentlichen axial gerichteten Kraft und dem Zentralausrücker abgefangen werden.

In der Zeichnung zeigen:
- Fig. 1: eine erfindungsgemäße Ausrückeeinheit sowie eine erfindungsgemäße Betätigung für eine Ausrückeeinheit im Schnitt,
- Fig. 1a: die Anordnung nach Fig. 1 in derselben Darstellung wie Fig. 1,
- Fig. 1b: die Anordnung nach Figur 1 in betätigtem Zustand,
- Fig. 1c: die Anordnung nach Figur 1 bei Verschleiß,
- Fig. 2: eine weitere Ausrückeeinheit sowie eine weitere erfindungsgemäße Betätigung für eine Ausrückeeinheit in ähnlicher Darstellung wie Figur 1,

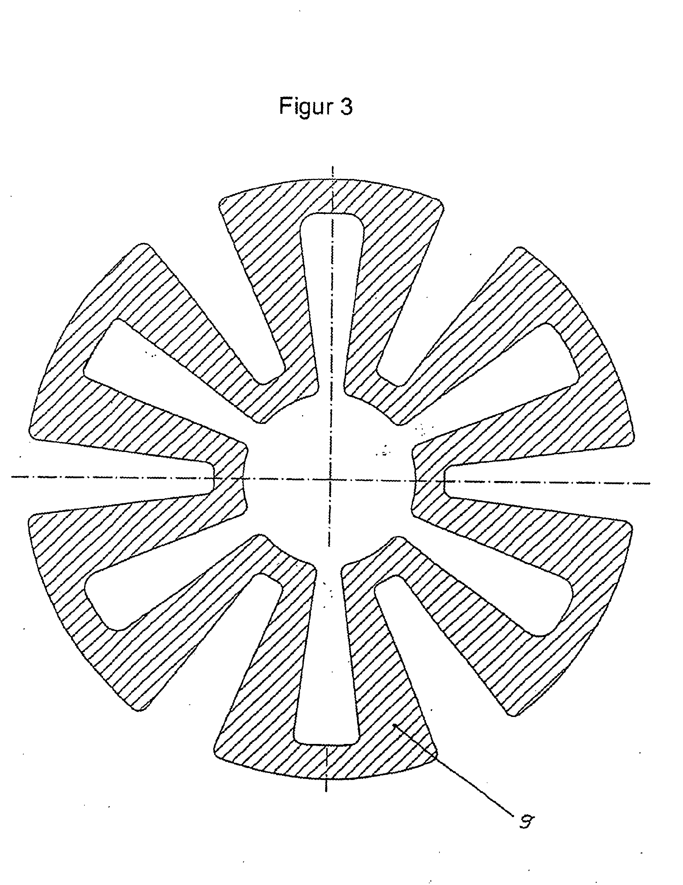

- Fig. 3: eine als Stößel dienende Tellerfeder in Aufsicht,
- Fig. 4: eine vierte Ausrückeeinheit sowie eine vierte erfindungsgemäße Betätigung für eine Ausrückeeinheit in ähnlicher Darstellung wie in Figur 1 und
- Fig. 5: eine Detailansicht der Anordnung nach Figur 4

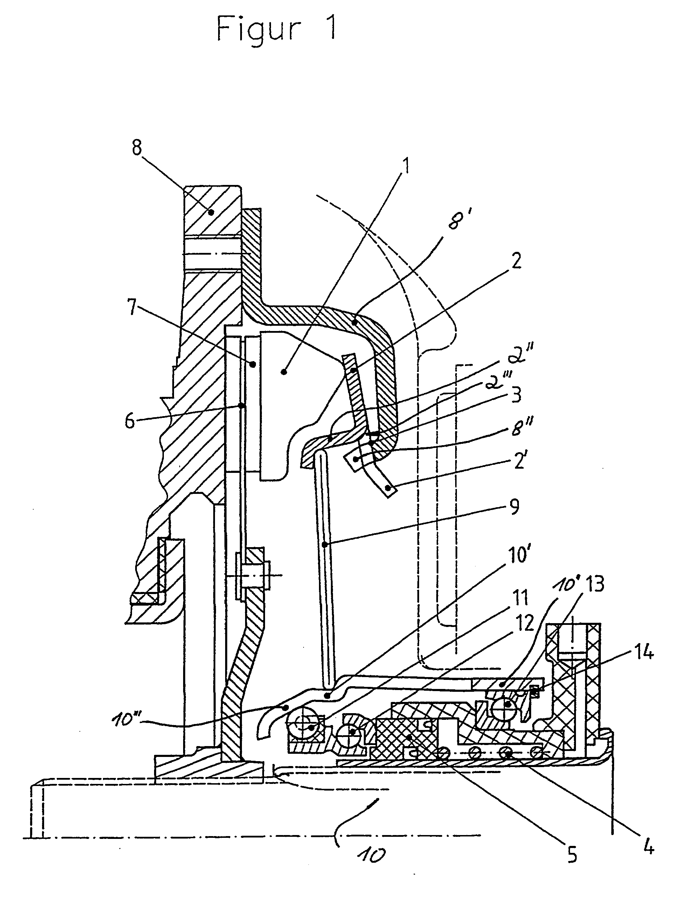

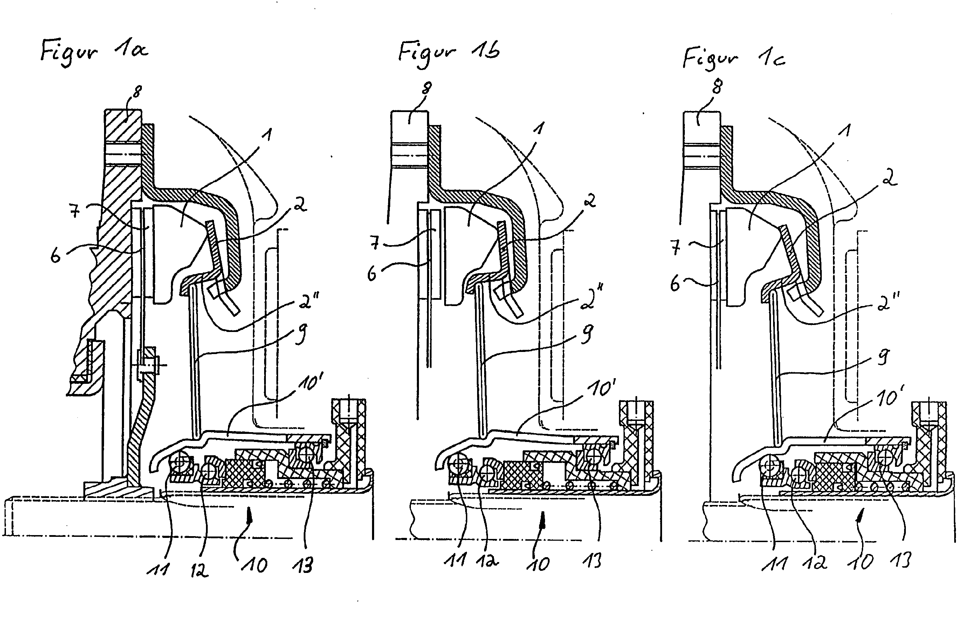

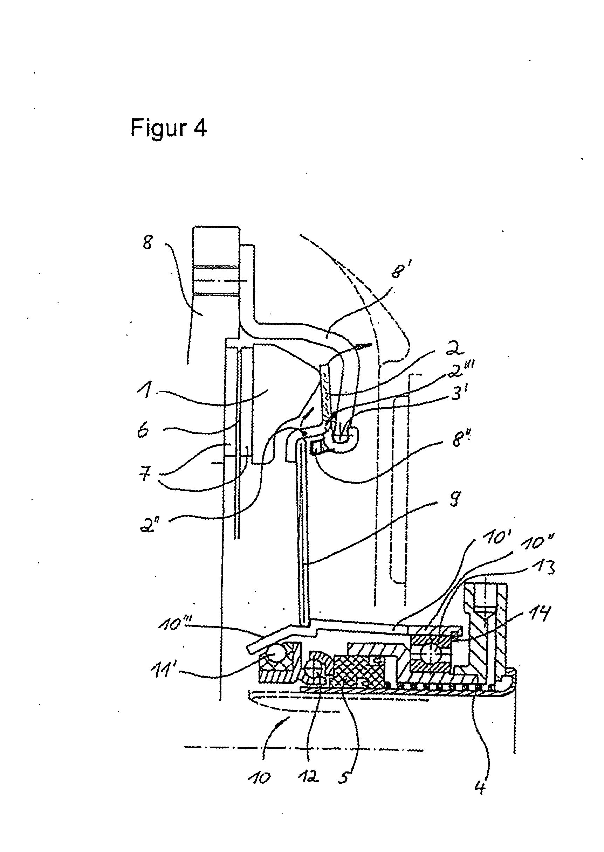

Bei dem in den Figuren 1 bis 1c dargestellten Ausführungsbeispiel ist eine Mitnehmerscheibe 6 mit ihren beiden Reibbelägen 7 zwischen einem Kupplungsflansch 8 und einer Druckplatte 1 eingeklemmt. Eine entsprechende Vorspannung liefert eine Tellerfeder 2, die sich an einem Drehpunkt 3 eines Kupplungsgehäuses 8' abstützt und als Ausrückeeinheit dient. Zum Auskuppeln wird die Tellerfeder 2 ausgerückt, so daß die Klemmspannung zwischen Kupplungsflansch 8 und Druckplatte 1 aufgehoben ist (siehe Figur 1b). Das geschieht dadurch, daß eine Tellerfeder 9 (beispielhaft in Figur 4 dargestellt) durch einen Zentralausrücker 10 betätigt wird und damit einen in axiale Richtung auf die Druckplatte weisenden Hebel 2" der Tellerfeder 2 auslenkt. Beim Einrücken erfolgt dieser Vorgang in umgekehrter Richtung.

Wie ersichtlich, liegt die Tellerfeder 2 auf Höhe des Drehpunktes 3 lediglich an dem Kupplungsgehäuse an. Zur Stabilisierung der Tellerfeder 2 weist diese Zungen 2' auf.

Der Zentralausrücker 10 umfaßt als Umlenker mehrere, über einen zylinderförmigen Bereich miteinander verbundene Zungen 10', die einerseits über einen zylinderförmigen Bereich 10" an einem Kugellager 13 und andererseits über einen schräg verlaufenden Bereich 10''' und Walzen 11 an einem Kugellager 12 abgestützt sind. Der zylinderförmige Bereich 10" ist über einen Sicherungsring 14 an dem Kugellager 13 gesichert. Die beiden Kugellager 12, 13 sind über einen Stempel 5 und eine Feder 4 hydraulisch axial gegeneinander bewegbar. Statt des hydraulischen Antriebs ist allerdings jede mögliche Antriebsart, insbesondere ein mechanischer, pneumatischer oder elektrischer Antrieb denkbar.

Bei einer Axialbewegung des Kugellagers 12 rollen die Walzen 11 an der Schräge 10''' der Zungen 10' entlang und die Axialbewegung wird in eine Radialbewegung der Zungen 10' umgesetzt. Hierdurch wird die Tellerfeder 9 angetrieben. Wie ersichtlich, erfolgt die relative Axialbewegung der Kugellager 12, 13 nach außen hin kräftefrei, so daß der Zentralausrücker 10 nur mit wesentlich geringerer Festigkeit in seiner Position gehalten werden muß. Insbesondere kann sogar eine Clips- oder Rastverbindung zu dessen Befestigung ausreichen.

Bei Verschleiß (siehe Fig. 1c) wird der Stempel 5 durch die Tellerfedern 2 und 9 weiter eingerückt. Wie ersichtlich, sind die hierbei auftretenden Weglängen wesentlich geringer, als wenn ein Hebel von der Tellerfeder 2 bis zu dem Stempel 5 geführt wäre, wie beim Stand der Technik der Fall.

Hierbei und bei der Montage kann die Tellerfeder 2 an einem Anschlag 8", der durch eine entsprechende Abwinklung des Gehäuses 8' gebildet ist, anliegen.

Die Tellerfeder 9 ist derart ausgelegt, daß sie in unverspanntem Zustand konusförmig ist. Zur Montage braucht die Tellerfeder 9 dann lediglich gegen eine radiale Schulter des Hebels 2" der Tellerfeder 2 gebracht werden und wird dann von einer entsprechenden Schulter des Zentralausrückers 10 erfaßt, wenn dieser eingesetzt wird. Erreicht der Zentralausrücker 10 seine Montageposition befindet sich dann auch die Tellerfeder 9 in ihrer in Figur 1 dargestellten Position.

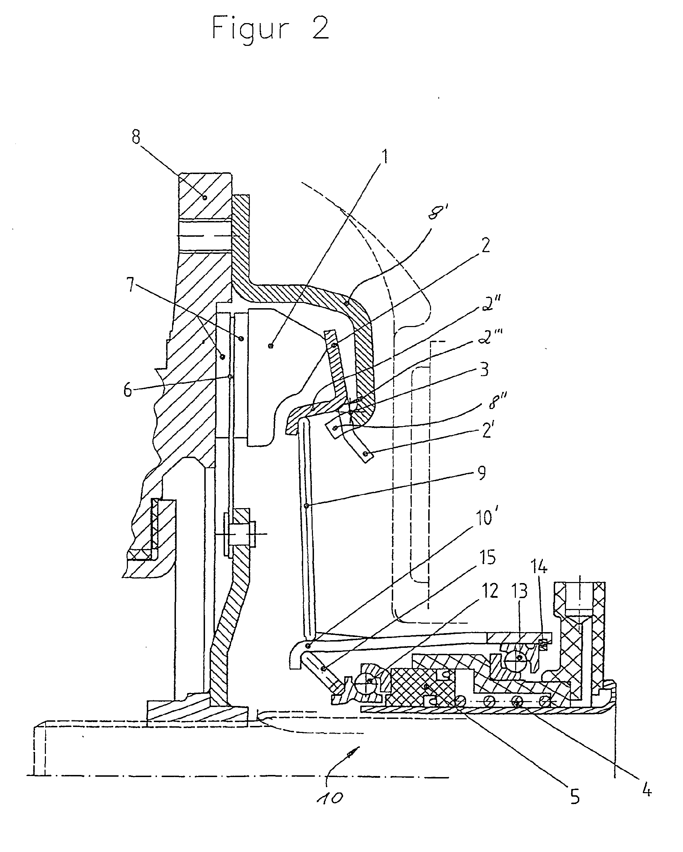

Die in Figur 2 dargestellte Ausführungsform entspricht im wesentlichen der zuvor beschriebenen Ausführungsform. Lediglich die Montageschulter des Zentralausrückers 10 ist als Zunge ausgeformt, und es wird statt der Walze 11 eine als Hebel dienende Tellerfeder 15 verwandt.

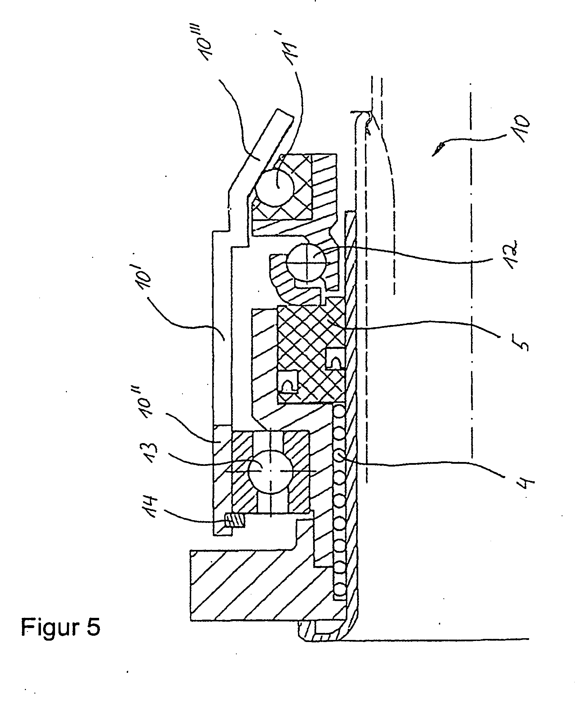

Die in den Figuren 4 und 5 dargestellte Ausführungsform entspricht im wesentlichen der in Figur 1 dargestellten Ausführungsform, nur daß statt der Walzen 11, Kugeln 11' zum Abstützen des schrägverlaufenden Bereichs 10''' vorgesehen sind. Darüberhinaus ist die Feder 4 an einer anderen Stelle des Zentralausrückers 10 abgestützt.

Ausserdem ist bei dieser Ausführungsform die Tellerfeder mittels eines Festlagers 3' an dem Gehäuse 8' gelagert. Wie durch die Pfeile angedeutet, sind die Kräfteverhältnisse, unter anderem bedingt durch den radial außerhalb des Lagerpunktes 3' (bzw 3) vorgesehenen Angriffspunktes 2''' für eine die Tellerfeder 2 ausrückende Kraft, derart, daß an dieser Stelle auch eine einfache Abstützung an dem Gehäuse 8' ausreichen würde.

## Patentansprüche

1. Ausrückeeinheit für eine Kupplungsdzuckplatte (1) mit Mitteln zum Aufbringen einer im Wesentlichen axial gerichteten Kraft auf die Druckplatte, wobei die Mittel zum Aufbringen der im Wesentlichen axial gerichteten Kraft im Wesentlichen radial angetrieben werden, umfassend einen Kraftwandler (2), der eine Kraft mit einer radialen Komponente in eine im Wesentlichen axial gerichtete, auf die Druckplatte aufgebrachte Kraft wandeln kann, und einen Kraftgeber (9), der durch einen Zentxalausrücker (10) betätigbar ist und mit einer Kraft mit einer radialen Komponente auf den Kraftwandler wirken kann, ***dadurch gekennzeichnet, dass*** der Kraftgeber einen im Wesentlichen radial angeordneten Stößel (9) umfasst, der durch eine radiale Bewegung des Zentralausrückers (10) angetrieben wird.

2. Ausrückeinheit nach Anspruch 1, ***dadurch gekennzeichnet, dass*** der Kraftwandler (2, 2") einen Winkelhebel mit einem im Wesentlichen axial gerichteten Winkelarm und mit einem im Wesentlichen radial gerichteten Hebelarm umfasst.

3. Ausrückeinheit nach Anspruch 1 oder 2, ***dadurch gekennzeichnet, dass*** der im Wesentlichen radial angeordnete Stößel eine Tellerfeder umfasst.

## Claims

1. A disengaging unit for a clutch pressure plate (1) with means for applying a substantially axially oriented force on the pressure plate, the means for applying the substantially axially oriented force being driven radially, including a force converter (2) that converts a force with a radial component into a substantially axially oriented force applied on the pressure plate, and a force transmitter (9) that is actuatable by a central disengaging device (10) and can act with a force having a radial component on the force converter, ***characterized in that*** the force transmitter includes a substantially radially disposed tappet (9) that is driven by a radial movement of the central disengaging device (10).

2. The disengaging unit according to claim 1, ***characterized in that*** the force converter (2, 2") includes a bell crank lever with a substantially axially oriented angled arm and with a substantially radially oriented lever arm.

3. The disengaging unit according to claim 1 or 2, ***characterized in that*** the substantially radially oriented tappet includes a cup spring.

## Revendications

1. Unité de débrayage pour un plateau de pression d'embrayage (1) ayant des moyens pour l'application d'une force orientée sensiblement axialement au plateau de pression, les moyens pour appliquer la force orientée sensiblement axialement étant entraînés sensiblement radialement, comprenant un transformateur de forces (2) qui peut transformer une force ayant une composante radiale en une force orientée sensiblement axialement et appliquée au plateau de pression, et un transmetteur de forces (9) qui est susceptible d'être actionné par un débrayeur central (10) et pouvant agir sur le transformateur de force avec une force ayant une composante radiale, ***caractérisé en ce que*** le transmetteur de forces comprend un poussoir (9) orienté sensiblement radialement et entraîné par un mouvement radial du débrayeur central (10).

2. Unité de débrayage selon la revendication 1, ***caractérisé en ce que*** le transformateur de forces (2, 2") comprend un cliquet d'embrayage ayant un bras de préhension orienté sensiblement axialement et ayant un bras de levier orienté sensiblement radialement.

3. Unité de débrayage selon la revendication 1 ou 2, ***caractérisé en ce que*** le poussoir disposé sensiblement radialement comprend un ressort à disque.
